# EUROPÄISCHE PATENTSCHRIFT

(11) **EP 3 335 257 B1**
(45) Veröffentlichungstag und Bekanntmachung des Hinweises auf die Patenterteilung: **23.01.2019**
(21) Anmeldenummer: 17783849.7
(22) Anmeldetag: 12.10.2017
(51) Int. Cl.: H01M 2/10

(54) **BATTERIEGEHÄUSE**
BATTERY HOUSING
BOÎTE POUR BATTERIES

(30) Priorität: 02.11.2016 DE 102016120828
(43) Veröffentlichungstag der Anmeldung: 20.06.2018
(73) Patentinhaber: Kirchhoff Automotive Deutschland GmbH, 57439 Attendorn (DE)
(72) Erfinder: GÜNTHER, Alexander, 57462 Olpe (DE); TÖLLER, Marco, 51107 Köln (DE)
(74) Vertreter: Haverkamp, Jens
(86) Internationale Anmeldenummer: PCT/EP2017/076124
(87) Internationale Veröffentlichungsnummer: WO 2018/082897

(56) Entgegenhaltungen:
- EP-A1- 2 332 761
- EP-A1- 2 685 523
- DE-U1-202016 102 223
- JP-A- 2009 266 653

## Beschreibung

Die Erfindung betrifft ein Batteriegehäuse für ein elektromotorisch angetriebenes Fahrzeug mit einem einen Boden und daran angeformte Seitenwände aufweisenden Wannenteil und mit einer das Wannenteil außenseitig umgebenden Rahmenstruktur, wobei zwischen den Seitenwänden und der außenseitig dazu angeordneten Rahmenstruktur ein Spalt verbleibt.

Bei elektromotorisch angetriebenen Fahrzeugen, wie beispielsweise bei Personenkraftwagen, Flurförderfahrzeugen oder dergleichen werden Batteriemodule als Stromspeicher eingesetzt. Derartige Batteriemodule sind typischerweise aus einer Vielzahl einzelner Batterien zusammengesetzt. Bei diesen Batterien handelt es sich um so genannte Hochvoltbatterien. An die Unterbringung derartiger, für einen Betrieb eines solchen Fahrzeuges notwendigen Batteriemodule, sind gewisse Anforderungen gestellt. Wesentlich ist, dass das oder die Batteriemodule in ihrem Batteriegehäuse vor äußeren Einflüssen geschützt sind. Insbesondere müssen diese bei crashbedingten Krafteinträgen den geforderten sicherheitsrechtlichen Anforderungen entsprechen.

DE 20 2016 102 223 U1 offenbart ein Batteriegehäuse mit einem Wannenteil und einem lösbar mit dem Wannenteil verbundenen Deckelteil. Beide Teile weisen einen an ihren zueinander weisenden Seiten umlaufenden, nach außen abragenden Montageflansch auf.

Kostengünstig lässt sich ein Wannenteil für ein Batteriegehäuse beispielsweise durch Tiefziehen einer Stahlplatine herstellen. Dieses bedingt, dass die an den Boden des Wannenteils angeformten Seitenwände unter Ausbildung einer Entformungsschräge an dem Boden angeformt sind. Dies bedeutet, dass die Seitenwände mit dem Boden einen Winkel einschließen, der um wenige Grad größer als 90° ist. E ntformungsschrägen von etwa 3°sind üblich. Bei einer solchen Ausgesta Itung der Seitenwände schließen diese mit dem Boden einen Winkel von 93° ein. Dieses ist erforderlich, um das Formwerkzeug nach dem Umformprozess aus dem geformten Batterievolumen herausziehen zu können.

Zum Bereitstellen eines mechanischen Schutzes für das Batteriegehäuse, insbesondere für das oder die darin aufgenommenen Batteriemodule, ist das Wannenteil oder sind die Wannenteile von einer Rahmenstruktur eingefasst, die außenseitig bezüglich der Seitenwände angeordnet ist. Eine solche Rahmenstruktur wird aus einzelnen, zu einem Rahmenprofil zusammengesetzten Profilabschnitten gebildet. Ein Batteriegehäuse mit einem solchen Wannenteil ist aus US 2011/0143179 A1 bekannt. Als Profilabschnitte werden zur Gewichtsersparnis stranggepresste Leichtmetallhohlkammerprofile, typischerweise Aluminiumstrangpressprofile, verwendet. Der äußere Umriss des Wannenteils im Bereich des oberen Abschlusses seiner Seitenwände und die innere Weite eines solchen Rahmenteils sind aufeinander abgestimmt. Aus Kostengründen werden standardmäßige Hohlkammerprofilabschnitte eingesetzt, mithin solche, die eine rechtwinklige Querschnittsgeometrie aufweisen. Die Abstützung der Innenseite des Rahmenprofils erfolgt an der Außenseite der Seitenwände des Wannenteils in ihrem oberen Endabschnitt, und zwar unmittelbar unterhalb des Überganges der Seitenwand in den nach außen davon abragenden Montageflansch. Der Montageflansch liegt sodann auf der Oberseite eines Profilabschnittes des Rahmenprofils auf. Insofern befindet sich zwischen der Außenseite der Seitenwände und der Außenseite der dazu angeordneten Rahmenstruktur aufgrund der geneigten Anordnung der Seitenwände ein Spalt.

Die Rahmenstruktur dient zur Aufnahme von Stößen, wie diese beispielsweise bei einem Aufprall vorkommen können. Zumindest bis zu einem gewissen Grad soll durch diese das in dem Wannenteil enthaltene Batterievolumen vor Beschädigungen geschützt werden. Zur Aussteifung des Wannenvolumens werden mitunter Längs- und Querstreben darin angeordnet, die sich mit ihren Stirnflächen an den Oberflächen der zueinander weisenden Seitenwände abstützen. Aufgrund der geneigten Ausrichtung der Seitenwände müssen die Enden derartiger Streben in einem komplementären Winkel zur Entformungsschräge auf Gehrung geschnitten werden, damit diese mit ihrer Endfläche vollflächig an der Seitenwand anliegen. Diese Streben dienen dem Zweck, das Wannenteil auszusteifen. Die Stoßenergie, die im Aufprallfalle seitlich auf einen Profilabschnitt eines solchen Rahmenprofils wirkt, soll über den oder die in Stoßrichtung verlaufenden Streben auf die dem Stoß abgewandte Seite weitergeleitet werden. Diese wirkt typischerweise gegen ein Widerlager. Aufwändig ist bei diesem Konzept die notwendige Endenbearbeitung der eingesetzten Streben. Zudem hat sich gezeigt, dass eine vollflächige Krafteinwirkung in die Streben erst erfolgt, wenn der Stoß empfangende Profilabschnitt des Rahmenteils bereits zu einem gewissen Grad deformiert ist.

Nicht unproblematisch ist zudem die Befestigung der Streben in dem Wannenteil. Gewünscht ist, dass die Enden der Streben mit den Seitenwänden verschweißt sind. Dieses hat jedoch durch den hohen Wärmeeintrag beim Schweißen einen nicht unbeträchtlichen Verzug des Wannenteils zur Folge. Auch wenn ein solcher Verzug in einem nachfolgenden Richtprozess wieder beseitigt werden kann, ist dieser zusätzliche Prozessschritt bei der Herstellung erforderlich.

Ausgehend von diesem diskutierten Stand der Technik liegt der Erfindung daher die Aufgabe zugrunde, ein Batteriegehäuse der eingangs genannten Art dergestalt weiterzubilden, dass sich das Wannenteil nicht nur kostengünstig unter Berücksichtigung der daran gestellten Festigkeitsanforderungen herstellen lässt, sondern dass zudem die Crash-Performance verbessert ist.

Gelöst wird diese Aufgabe erfindungsgemäß durch ein eingangs genanntes gattungsgemäßes Batteriegehäuse, bei dem zumindest zwei einander bezüglich des Wannenvolumens gegenüberliegende Seitenwände des Wannenteils jeweils wenigstens eine von dem Wannenvolumen wegweisend ausgeführte, sich an der Rahmenstruktur abstützende Verprägung aufweisen und bei dem in den einander gegenüberliegenden Verprägungen eine im Wannenteil angeordnete Strebe mit ihrem stirnseitigen Ende abgestützt ist.

Bei diesem Batteriegehäuse sind an zumindest zwei einander gegenüberliegenden Seitenwänden Verprägungen vorgesehen. Die Verprägungen sind vom Wannenvolumen wegweisend ausgeführt und erstrecken sich über einen gewissen Seitenwandabschnitt. Der in die Verprägung eingebundene Seitenwandabschnitt kann sich über die gesamte Höhe der Seitenwand erstrecken oder auf die Höhe der in einer solchen Verprägung abzustützenden Stirnfläche einer Strebe abgestimmt sein. In Längserstreckung der Seitenwand ist die Verprägung an die diesbezügliche Erstreckung der darin abgestützten Stirnfläche der Strebe angepasst, ist mithin geringfügig größer bemessen als die diesbezügliche Erstreckung der endseitigen Stirnfläche der Strebe. Die endseitige Stirnfläche der Strebe kann durch das Querschnittsprofil der Strebe bereitgestellt sein. Durchaus möglich ist es auch, die einander gegenüberliegenden Seitenwände einer solchen Strebe zum Ausbilden von Montage- bzw. Stützflanschen nach außen abzukanten. Bei einer solchen Ausgestaltung bildet der Umriss der Strebe mit ihren ausgestellten Flanschen die endseitige Stirnfläche.

Je nach gewünschtem Anschluss der endseitigen Stirnflächen einer Strebe an eine solche Verprägung kann in die Verprägung ein gekrümmter Übergangsbereich zwischen der Seitenwand und dem Boden des Wannenteils von der Verprägung unberührt bleiben. In einer anderen Ausgestaltung erstreckt sich die Verprägung bis zu dem Boden, so dass der Boden der Verprägung mit dem Boden des Wannenteils mit einem nur geringen Übergangsradius einen rechten Winkel einschließt.

Die Verprägungen stützen sich an der außenseitig diese umgebenden Rahmenstruktur ab, bilden mithin bezüglich der jeweiligen Seitenwand, die sich ansonsten nicht an der Rahmenstruktur abstützt, Abstützfortsätze aus. Das Abstützen der Verprägungen an der Rahmenstruktur, welche Abstützung in Bezug auf die Längserstreckung der jeweiligen Seitenwand an die diesbezügliche Erstreckung der daran abgestützten Strebe angepasst ist, macht sich positiv beim Fügen der endseitigen Stirnfläche an dem verprägten Seitenwandabschnitt bemerkbar. Die außenseitig umgebende, an der Außenseite der Verprägung anliegende Rahmenstruktur bildet eine Wärmesenke, wodurch ein Verziehen des Wannenteils durch Verschweißen der endseitigen Stirnflächen einer Strebe mit der Seitenwand vermieden sind. Ein nachträgliches Richten ist sodann nicht mehr erforderlich. Diese sich an der umlaufenden Rahmenstruktur abstützenden Verprägungen beeinflussen auch positiv die Crash-Performance. Ein auf die Rahmenstruktur einwirkender Stoß wird zunächst über die in den Verprägungen abgestützten Streben aufgefangen. Diese müssen erst zu einem gewissen Maß deformiert werden, bevor der zwischen der Rahmenstruktur und der Seitenwand des Wannenteils vorhandene Spalt geschlossen und die Seitenwand in den nicht verprägten Seitenwandabschnitten deformiert wird. Insofern sind durch die sich an der umgebenden Rahmenstruktur abstützenden Verprägungen Energie absorbierende Crashstrukturen geschaffen, so dass eine Beschädigung von in dem Wannenteil aufgenommener Batteriemodule erst möglich ist, wenn bereits ein gewisses Maß an Energie durch Deformation der Verprägung und der darin abgestützten Strebe abgebaut ist. Besonders zweckmäßig ist eine Ausgestaltung, bei der das den Boden der Verprägung mit den benachbarten unverprägten Seitenwandabschnitten verbindende Seitenwandmaterial mit den angrenzenden Seitenwandabschnitten einen stumpfen Winkel, typischerweise einen Winkel von 120° oder mehr einschließt. Dieses ermöglicht eine Energie absorbierende Rückverformung der Verprägung im Falle eines Aufpralles auf die Außenseite der Rahmenstruktur, ohne zu einem ins Wanneninnere gerichteten Einbeulen zur Folge zu haben. Somit werden auch durch diese Maßnahme in dem Wannenvolumen aufgenommenen Batteriemodule geschützt.

Vorteilhaft ist die Belassung eines Spaltes zwischen den Seitenwänden des Wannenteils und der umgebenden Rahmenstruktur auch, wenn beide Teile aus unterschiedlichen Materialien hergestellt sind, das Wannenteil beispielsweise ein Stahlblechbauteil und die Rahmenstruktur aus Aluminiumprofilen zusammengesetzt ist. Dann ist die Kontaktfläche zwischen diesen beiden Bauteilen auf ein Minimum reduziert, sodass materialbedingte Korrosionserscheinungen aufgrund der Materialunterschiedlichkeit nicht zu befürchten sind bzw. diesen einfacher entgegengewirkt werden kann.

Gemäß einer Ausgestaltung des erfindungsgemäßen Batteriegehäuses ist die Verprägung ausgeführt, damit der gegenüber den unverprägten Seitenwandabschnitten verprägte Seitenwandabschnitt in einem rechten Winkel zum Boden des Wannenteils angeordnet ist. Mithin ist in dem verprägten Seitenwandabschnitt keine Entformungsschräge vorhanden. Eine solche Verprägung lässt sich in einem an die Formgebung des Wannenteils durch Tiefziehen anschließenden Schritt ausbilden. Bevorzugt ist jedoch eine Ausgestaltung, bei der bereits mit der Formgebung des Wannenteils aus einer Blechplatine die Verprägung mitgeformt wird. Auch wenn der durch die Verprägung eingefasste Seitenwandabschnitt keine Entformungsschräge aufweist, ist dieser Seitenwandabschnitt hinreichend kurz, damit ein Formwerkzeug ohne Weiteres aus dem geformten Wannenteil herausgezogen werden kann. Es ist dann kein zusätzlicher Schritt erforderlich, die Verprägungen in die Seitenwände einzubringen. Zudem ist es möglich innerhalb der Verprägungen engere Toleranzen zu realisieren. Dies erfolgt gegenüber einer Ausbildung ohne Verprägung aufgrund einer steiferen Fläche.

Die verprägten Seitenwandabschnitte liegen bei einer Ausbildung der Rahmenstruktur durch ein aus einzelnen Profilabschnitten zusammengesetztes Rahmenprofil sodann an der zu der Außenseite der Seitenwände des Wannenteils weisenden Fläche an. Infolgedessen ist eine Kraftweiterleitung in den Boden des Wannenteils möglich, ohne dass zuvor der den Stoß umfangende Profilabschnitt und die daran nur mit ihrem oberen Abschluss anliegende Seitenwand deformiert worden ist. Bei einer angenommenen Höhe des Wannenteils von 150 mm und einer Entformungsschräge von 3 Grad würde ohne das Konzept dieser Erfindung ein Stoß erst nach Deformation der Seitenwand um 8 mm in den Boden des Wannenteils eingeleitet werden können. Dies ist insbesondere deshalb erwähnenswert, da verschiedene Automobilhersteller nur Intrusionstiefen bis 5 mm akzeptieren. Aus diesem Grunde weist ein solches Wannenteil eine gegenüber herkömmlichen Wannenteilen deutlich verbesserte Crash-Performance auf. Vorstellbar ist an dieser Stelle aber auch ein geringer weitestgehend gleichmäßiger Abstand der Außenseite der Seitenwand des Wannenteils zum Rahmenprofil. Wichtig ist grundsätzlich dabei, dass in diesem Abschnitt die Krafteinleitung bei einer Kollision gleichmäßig über die gesamte Querschnittsfläche erfolgen kann. Für diesen Fall hat sich sogar gezeigt, dass mittels der versteiften lokalen Anbindungsflächen in Gestalt der Verprägungen bereits ein Verzug durch den Wärmeeintrag beim Schweißen reduziert ist. Dies bedeutet, dass bereits die bloße Verprägung einen Verzug weitestgehend unterbindet und keine zwangsläufige Wärmeableitung benötigt. Es versteht sich, dass durch eine montageflanschseitige Wärmeabfuhr in die Rahmenstruktur einem Verzug durch den Wärmeeintrag beim Schweißen zusätzlich entgegengewirkt werden kann. Daraus folgt, dass durch die Verprägung ein doppelter Vorteil zu Tage tritt. Einerseits bedarf es keines weiteren Arbeitsschrittes in Gestalt einer eingebrachten Gehrung an den jeweiligen Strebenenden und andererseits hat die eingebrachte Wärme keine verzugsunterstützenden Auswirkungen.

Um eine verbesserte Stoßeinleitung aus allen Richtungen zu ermöglichen, ist in einem Ausführungsbeispiel vorgesehen, dass alle einander gegenüberliegenden Seitenwände zumindest eine solche Verprägung aufweisen. Es ist durchaus möglich, dass die einander gegenüberliegenden Seitenwände auch mehrere, voneinander beabstandete Einprägungen aufweisen. Dieses ist sinnvoll, wenn die Länge der Seitenwand des Wannenteils größer ist. Man wird diese in Abhängigkeit von der gewünschten Aussteifung auswählen. Die Verprägungen der gegenüberliegenden Seitenwände sind typischerweise spiegelsymmetrisch zu der zwischen diesen Seitenwänden befindlichen Wannenteilquerebene. In einem solchen Fall eignen sich die Verprägungen in besonderer Weise, damit sich darin die Stirnfläche einer Querstrebe abstützt. Dadurch bedingt wird der Schutz des Batteriemoduls im Crashfall zusätzlich verbessert. Im Kollisionsfall steht der Querstrebe nämlich ein gegenüber den ohne Verprägung ausgebildeten und daran angrenzenden Bereichen der Seitenwand des Wannenteils zusätzlicher Verformungsweg zur Verfügung. Mit anderen Worten wird das oder werden die Batteriemodule durch diesen zusätzlich zur Verfügung stehenden Verformungsweg gegenüber herkömmlichen Ausbildungen auch länger vor einer Beschädigung im Falle einer Intrusion geschützt. Da der verprägte Seitenwandabschnitt mit dem Boden einen rechten Winkel einschließt, ist es nicht erforderlich, dass die Stirnfläche einer solchen Strebe auf Gehrung geschnitten wird. Ein von dem angrenzenden Profilabschnitt des Rahmenprofils empfangener Stoß wird sodann ohne Deformation der Seitenwand des Wannenteils unmittelbar vollflächig in die Stirnfläche der Strebe eingekoppelt und weitergeleitet. Insofern bilden die einander gegenüberliegenden Verprägungen der Seitenwände zugleich eine effektive und verbesserte Verankerung für in das Wannenteil anzuordnende Streben, und zwar unabhängig davon, ob es sich um Quer- oder Längsstreben handelt.

Die Verprägungen eignen sich nicht nur zur Abstützung der Stirnflächen der Streben an den verprägten Seitenwandabschnitten, sondern gestatten auch, dass diese in der Verprägung mit den Seitenwänden verschweißt werden können, ohne einen nennenswerten Verzug hinnehmen zu müssen. Dieses war vor dem Hintergrund der Erfahrungen mit herkömmlichen Wannenteilen überraschend. Man macht den nicht in Kauf zu nehmenden wärmebedingten Verzug an den signifikant versteiften lokalen Anbindungsflächen in Gestalt der Verprägungen beziehungsweise einer deutlich verbesserten Wärmeabfuhr durch einen etwaigen Kontakt zu der Rahmenstruktur fest.

Die Erfindung ist nachfolgend anhand eines Ausführungsbeispiels unter Bezugnahme auf die beigefügten Figuren beschrieben. Es zeigen:
- **Fig. 1:**: eine Draufsicht auf das Wannenteil eines Batteriegehäuses mit einer dieses einfassenden Rahmenstruktur,
- **Fig. 2:**: eine Detaillängsschnittdarstellung durch das Wannenteil der Figur 1 entlang der Linie A-B,
- **Fig. 3:**: eine Detaillängsschnittdarstellung durch das Wannenteil der Figur 1 entlang der Linie C-D,
- **Fig. 4a, 4b:**: eine perspektivische Detaildarstellung gemäß einem weiteren Ausführungsbeispiel in der Ausführung einer in eine Seitenwand eines Batteriegehäuses eingebrachten Verprägung mit einer sich darin mit ihrem stirnseitigen Ende abstützenden Strebe (Figur 4a) und in einem Längsschnitt durch die Strebe mit der im Querschnitt gezeigten Rahmenstruktur (Figur 4b),
- **Fig. 5a, 5b:**: eine perspektivische Detaildarstellung gemäß noch einem weiteren Ausführungsbeispiel in der Ausführung einer in eine Seitenwand eines Batteriegehäuses eingebrachten Verprägung mit einer sich darin mit ihrem stirnseitigen Ende abstützenden Strebe (Figur 5a) und in einem Längsschnitt durch die Strebe mit der im Querschnitt gezeigten Rahmenstruktur (Figur 5b) und
- **Fig. 6a, 6b:**: eine perspektivische Detaildarstellung gemäß noch einem weiteren Ausführungsbeispiel in der Ausführung einer in eine Seitenwand eines Batteriegehäuses eingebrachten Verprägung mit einer sich darin mit ihrem stirnseitigen Ende abstützenden Strebe (Figur 6a) und in einem Längsschnitt durch die Strebe mit der im Querschnitt gezeigten Rahmenstruktur (Figur 6b).

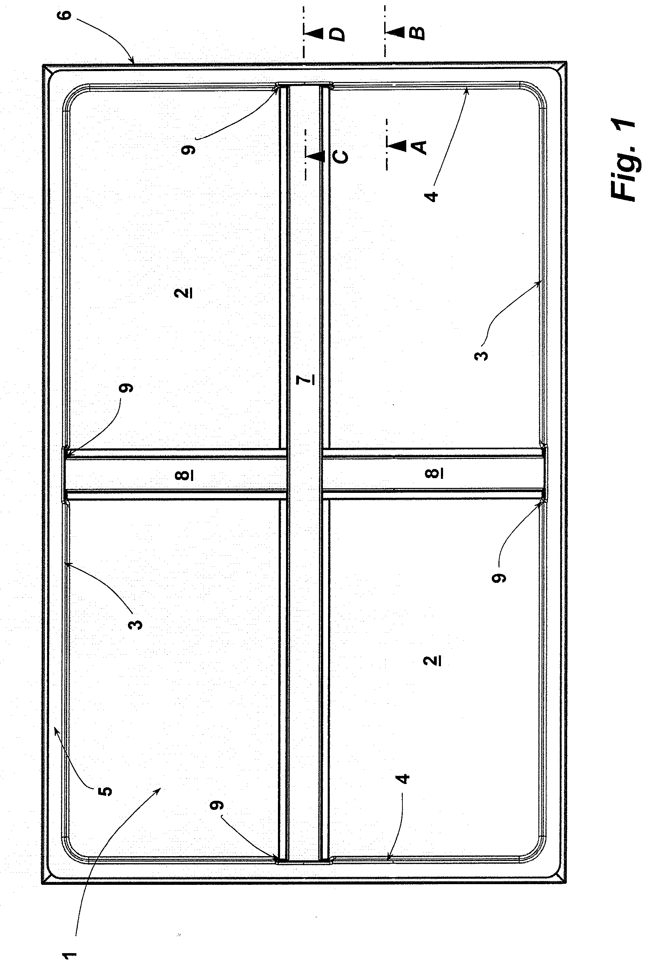

Ein Wannenteil 1 eines im Übrigen nicht näher dargestellten Batteriegehäuses ist in Figur 1 ein aus einer Stahlplatine tiefgezogenes Teil. Nicht gezeigt, aber auch denkbar ist an dieser Stelle auch ein Wannenteil, welches mittels abgekanteter Bauteile und anschließendem Verschweißen hergestellt ist. Das hier gezeigte Wannenteil umfasst einen Boden 2 und daran angeformte Seitenwände 3, 4, wobei es sich bei den Seitenwänden 3 um die Längsseitenwände und bei den Seitenwänden 4 um die Querseitenwände handelt. Die Seitenwände 3, 4 sind unter Ausbildung einer Entformungsschräge an den Boden 2 angeformt. An dem oberen Abschluss der Seitenwände 3, 4 ist ein nach außen und somit von dem Wannenvolumen wegweisend angeordneter Montageflansch 5 angeformt. Der Montageflansch 5 dient zum Verbinden des Wannenteils 1 mit einem Deckelteil (nicht dargestellt), wobei zwischen dem Montageflansch 5 des Wannenteils 1 und demjenigen des Deckelteils eine umlaufende Dichtung angeordnet ist. Beide Teile werden zum feuchtigkeitsdichten Verschluss von in dem Wannenteil 1 aufgenommenen Batteriemodulen miteinander verspannt.

Das Wannenteil 1 ist von einem Rahmenprofil 6, das eine Rahmenstruktur ausbildet, eingefasst. Das Rahmenprofil 6 selbst ist aus vier einzelnen Hohlkammerprofilabschnitten zusammengesetzt. Bei den Profilabschnitten handelt es sich um stranggepresste Aluminiumprofile. Diese Profilabschnitte sind an ihren Enden auf Gehrung geschnitten und miteinander zur Ausbildung des Rahmenprofils 6 verschweißt.

Eingesetzt sind in das Wannenteil 1 eine Längsstrebe 7, die mit ihren Enden an den Seitenwänden 4 abgestützt ist, und einer Querstrebe 8, die mit ihren Enden an den Seitenwänden 3 abgestützt ist und sich mittels eingebrachter Aussparung (nicht gezeigt) durch die Längsstrebe 7 erstreckt. Vorstellbar ist an dieser Stelle, dass nur eine oder beide der Streben 7 und 8 in ihrem Verbindungsbereich entsprechend ausgespart sind und beispielswiese mittels Steckverbindung miteinander verbunden sind. Die Längsstrebe 7 und die Querstrebe 8 des dargestellten Ausführungsbeispiels sind U-förmig profiliert, wobei der Rücken der Streben 7, 8 nach oben weist. Durch die durchgängige Erstreckung der beiden Streben 7 und 8 ist es möglich, dass bei einer Intrusion die in die Seitenwand eingebrachte Kraft von dieser Seitenwand auf die jeweils gegenüberliegende Seitenwand durchgängig übertragen werden kann.

Nicht gezeigt ist ferner in diesem Zusammenhang eine Ausführungsform, bei der in das Wannenteil 1 eine Trennstrebe eingesetzt ist, die mit ihren Enden an den Seitenwänden abgestützt ist, und zwei durch diese Trennstrebe voneinander dazu quer verlaufende getrennte Streben. Die voneinander getrennten Streben stützen sich dabei jeweils mit ihrer endseitigen Stirnfläche an der Innenseite einer Seitenfläche und mit ihrem anderen Ende an der Außenseite der zwischen diesen verlaufenden Trennstrebe ab. Im Übergangsbereich der beiden voneinander getrennten Streben ist es dann allerdings erforderlich, dass in die Trennstrebe ein oder mehrere Verbindungs- beziehungsweise Versteifungselemente eingebracht werden, die eine durchgängige Kraftübertragung von einer Seitenwand des Wannenteils in die jeweils gegenüberliegende gewährleisten. Dies ist deshalb von Bedeutung, da im Falle eines Aufpralls nur dadurch eine durchgängige Kraftübertragung von einer Seitenwand zur anderen und damit eine Abstützung sicherstellt. Ansonsten würde sich bei einem Krafteintrag in eine der beiden getrennten Streben sich diese jeweils lediglich an der Außenseite der Trennstrebe abstützen und diese verformen. Damit wäre der Verformungsbereich innerhalb des Batteriegehäuses und die Batteriemodule wären mit unzureichendem Schutz im Kollisionsfall versehen.

Ebenfalls nicht gezeigt ist ein Ausführungsbeispiel bei dem sich alle Streben nicht durchgängig von einer Seitenwand zur anderen erstrecken, aber mittels einer Verbindungselements, beispielsweise einem Knotenelement miteinander derart verbunden sind, dass bei einer Kraftbeaufschlagung im Falle eines Aufpralls eine durchgängige Kraftübertragung von einer Seitenwand zur anderen und damit eine Abstützung erfolgt.

In die einander gegenüberliegenden Seitenwände 3 bzw. 4 sind an gegenüberliegenden Positionen in Bezug auf die zwischen den Seitenwänden 3 bzw. 4 jeweils liegende Wannenteilquerebene Verprägungen 9 vorhanden, die sich über einen gewissen Abschnitt der jeweiligen Seitenwand 3, 4 erstrecken. Bei dem dargestellten Ausführungsbeispiel entspricht die Länge eines solchen Seitenwandabschnitts 10 einer Verprägung 9 in etwa der in Figur 1 erkennbaren Breite einer Strebe 7 bzw. 8, bedarfsweise zuzüglich der Schweißnahtbreite. Die Verprägungen 9 sind unter Vergrößerung des Wannenvolumens ausgeführt, und zwar derart, dass die verprägten Wandabschnitte mit dem Boden 2 des Wannenteils 1 einen Winkel von 90° einschließen. Die nicht verprägten Seitenwandab schnitte schließen aufgrund der Ausbildung einer Entformungsschräge mit dem Boden 2 einen Winkel von 93°ein. Die Verprägungen sind mit einem Radius von weniger als 10 mm typischerweise ausgeführt. Bei dem dargestellten Ausführungsbeispiel beträgt der Radius etwa 5 mm.

Ferner wird an dieser Stelle darauf hingewiesen, dass aufgrund der eingebrachten Verprägungen sogar die Möglichkeit besteht, dass die Entformungsschräge größer als 3 Grad ausgebildet sein kann und auch ein größerer Abstand kompensiert werden kann, ohne eine Beeinträchtigung des Crashverhaltens feststellen zu können. Vielmehr werden dadurch vielfältige Gestaltungsmöglichkeiten ermöglicht.

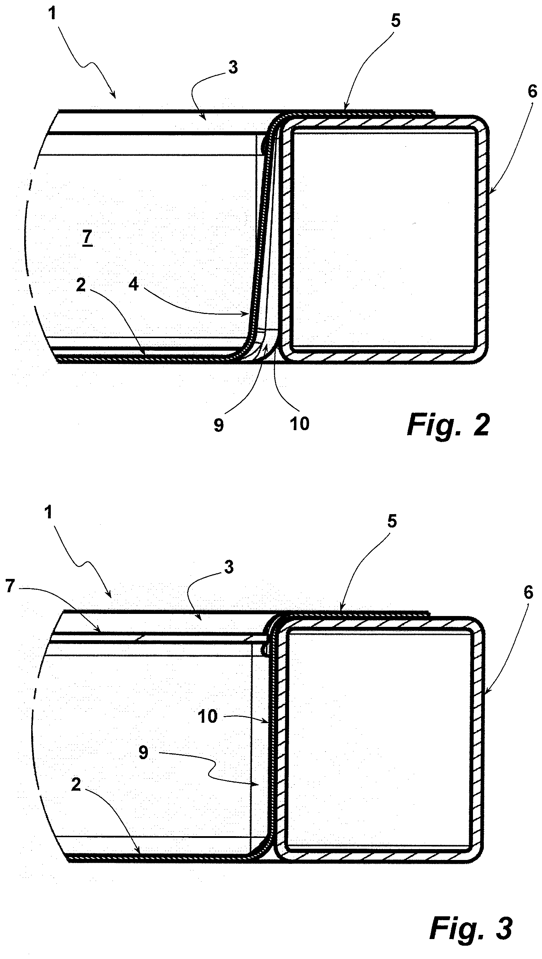

Der Teilquerschnitt der Figur 2 lässt den Übergang von der Seitenwand 3 mit ihrer geneigten Anordnung zur Ausbildung einer Entformungsschräge zu der Verprägung 9 deutlich werden. Durch die Verprägung 9 ist die ansonsten zwischen der Außenseite der Seitenwand 3 und der zu dieser Wand weisenden Außenseite des Rahmenprofils 6 befindliche Spalt über die Erstreckung der Verprägung geschlossen. Der verprägte Seitenwandabschnitt 10 - der Boden der Verprägung 9 - liegt mit seiner Außenseite vollflächig an der benachbarten Fläche des Rahmenprofils 6 an. Die Teilquerschnittdarstellung der Figur 3 zeigt diese Anlage des verprägten Seitenwandabschnittes 10 an der außenseitig angrenzenden Fläche des Rahmenprofils 6. Aus dieser Figur ist auch der Eingriff des Endes der Längsstrebe 7 in die Verprägung 9 hinein erkennbar. Die Darstellung der Figur 3 mit dem Eingriff der Längsstrebe 7 macht deutlich, dass diese in die Verprägung 9 eingreift und mit ihrer Stirnseite vollflächig an der Innenseite des Seitenwandabschnittes 10 anliegt, und zwar ohne dass ein Gehrungsschnitt erforderlich war.

Die übrigen Verprägungen 9 des Wannenteils 1 sind in gleicher Weise ausgeführt.

Die in eine Verprägung des Wannenteils 1 eingreifenden Endabschnitte der Streben 7, 8 sind darin stirnseitig verschweißt. Die Teilquerschnittdarstellung der Figur 3 verdeutlicht, dass es durch eine große Kontaktfläche des verprägten Seitenwandabschnittes 10 mit dem Rahmenprofil 6 möglich ist, dass eine besonders effektive Wärmeabfuhr gewährleistet wird. Insofern bildet das Rahmenprofil 6 mit seiner gegenüber der Wandstärke des Wannenteils 1 größeren Wandstärke eine effektive Wärmesenke. Da die Kontaktfläche der Außenseite der verprägten Seitenwandabschnitte 10 an dem Rahmenprofil 6 auf die Größe des sich in der Verprägung 9 abstützenden Endes der Strebe 7 begrenzt ist, werden zu der Verprägung 9 benachbarte, durch den Spalt von dem Rahmenprofil 6 beabstandete, nicht verprägte Seitenwandabschnitte nicht oder nur soweit erwärmt, dass ein Verziehen des Wannenteils 1 nicht zu befürchten ist. Begünstigt wird diese Wärmeabfuhr zudem dadurch, dass das Rahmenprofil 6 ein Aluminiumprofil ist und daher besonders gut Wärme leitet. Daher verzieht sich das Wannenteil 1 beim Einschweißen der Streben 7, 8 nicht.

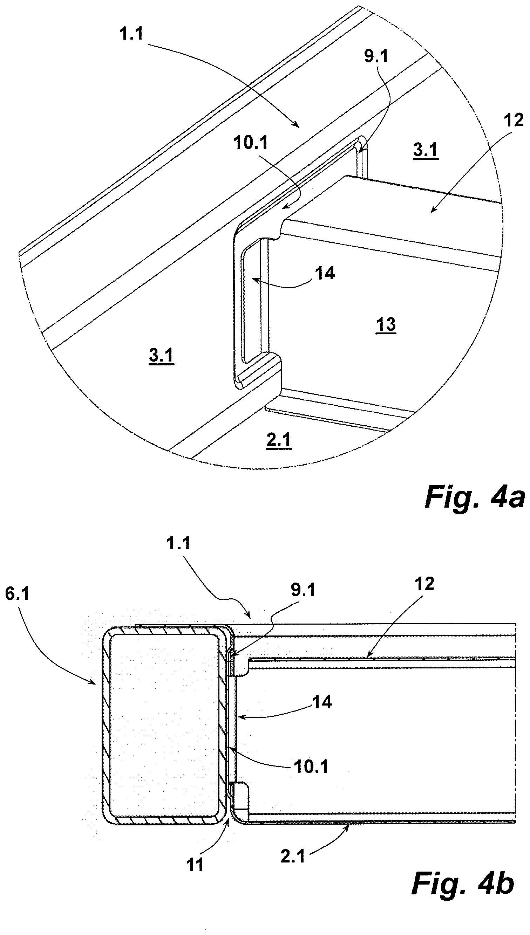

Die beschriebene Anordnung aus Wannenteil 1 und Rahmenprofil 6 mit den Streben 7, 8 anhand der geneigten Seitenwände 3, 4 ist auch mit solchen Wannenteilen verwirklichbar, deren Seitenwände nicht geneigt sind. Figuren 4a, 4b zeigen ein solches Ausführungsbeispiel. Das Wannenteil 1.1 weist rechtwinklig zu dem Boden 2.1 angeordnete Seitenwände 3.1 auf. Der Übergang von der Seitenwand 3.1 in den Boden 2.1 ist durch einen Radius gekrümmt. Wie aus der Schnittdarstellung der Figur 4b erkennbar, befindet sich auch bei dieser Ausgestaltung zwischen der zu dem Wannenteil 1.1 weisenden Seite des Rahmenprofils 6.1 ein Spalt 11. Nur in denjenigen Abschnitten der Seitenwand 3.1, in der eine Verprägung 9.1 eingebracht ist, ist diese das Wannenvolumen vergrößernd und somit nach außen gerichtet ausgeführt und stützt sich mit ihrem verprägten Seitenwandabschnitt 10.1 - ihrem Boden - an dem Rahmenprofil 6.1 ab.

Die in Figur 4a gezeigte Strebe 12 weist endseitig an seinen beiden in Längsrichtung der Seitenwand 3.1 weisende Seitenwänden 13 jeweils einen nach außen abgekanteten Montageflansch 14 auf. Mit diesem ist die Strebe 12 in dem verprägten Seitenwandabschnitt 10.1 abgestützt. Die Tiefe der Verprägung 9.1 ist so ausgelegt, dass diese größer ist als die Materialstärke des abgekanteten Montageflansches 14. Somit kann eine solche Verprägung, wie beispielsweise die Verprägung 9.1 auch genutzt werden, um andere Montagetechniken zum Anschließen einer Strebe 13 an das Wannenteil 1.1 umsetzen zu können, ohne dass hierdurch das Nutzvolumen des Wannenteils 1.1 reduziert werden würde.

Der Übergang von den unverprägten Abschnitten der Seitenwand 3.1 in den Boden der Verprägung 9.1 ist umlaufend geneigt ausgeführt, wobei bei dem dargestellten Ausführungsbeispiel eine Neigung von etwa 120° vorgesehen ist. Insofern schließt das Seitenwandmaterial, das den Übergang zwischen den unverprägten Abschnitten der Seitenwand 3.1 und dem verprägten Seitenwandabschnitt 10.1 verbindet, mit den benachbarten ebenen Seitenwandbereichen jeweils einen stumpfen Winkel von 120° ein.

Die Höhe der Verprägung 9.1 ist an die Höhe der Strebe 12 angepasst. Die Verprägung 9.1 endet in vertikaler Richtung vor dem gekrümmten Übergang zwischen der Seitenwand 3.1 in den Boden 2.1.

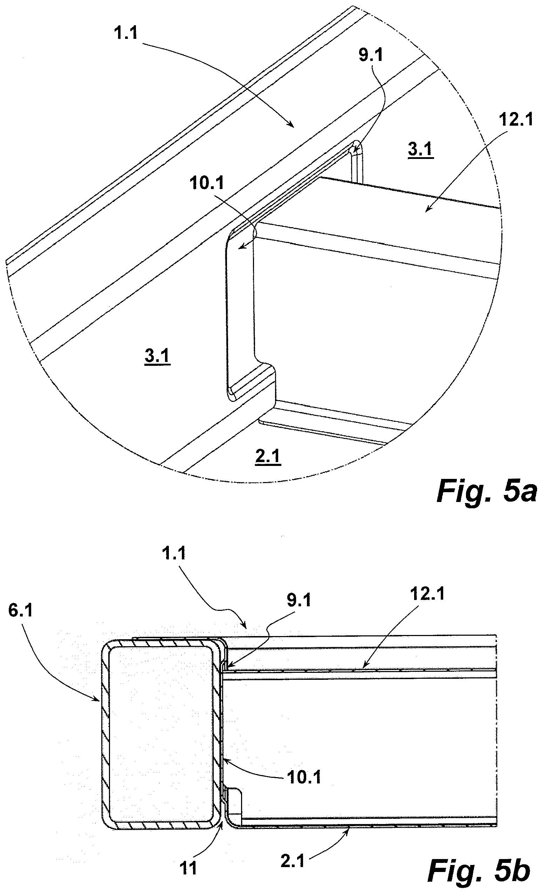

Figuren 5a, 5b zeigen das Wannenteil 1.1 mit ihrer Verprägung 9.1, in welche Verprägung 9.1 eine andere Strebe 12.1 eingesetzt ist. Die Strebe 12.1 liegt mit ihrer stirnseitigen Schnittebene an dem verprägten Seitenwandabschnitt 10.1 an. Im Übrigen gelten für diese Ausgestaltung dieselben Ausführungen wie zu dem Ausführungsbeispiel der Figuren 4a, 4b.

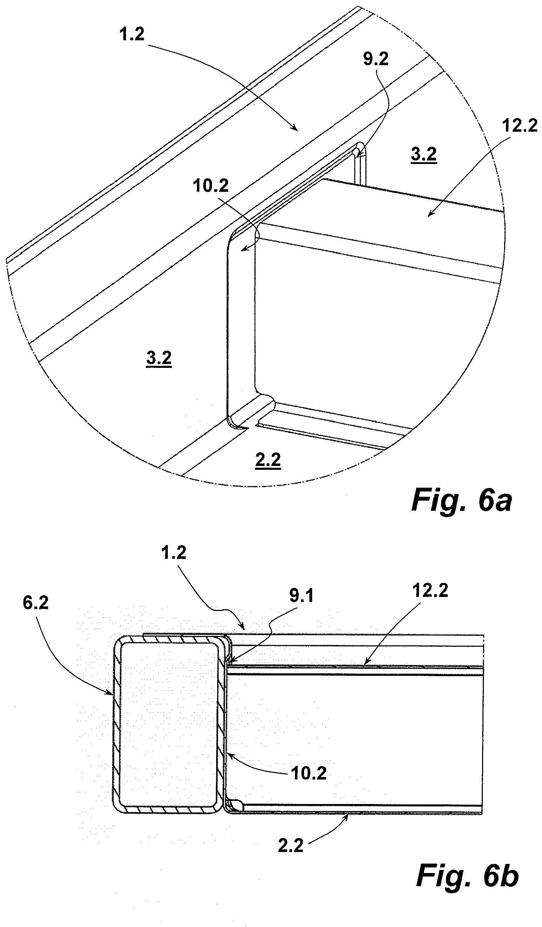

Figuren 6a, 6b zeigen ein weiteres Wannenteil 1.2 mit einer Verprägung 9.2, die im Unterschied zu der Verprägung 9.1 bis zu dem Boden 2.2 geführt ist, so dass die Verprägung 9.2 ebenfalls den gekrümmten Übergangsbereich zwischen der Seitenwand 3.2 und dem Boden 2.2 erfasst. In die Verprägung 9.2 ist eine Strebe 12.2 mit ihrer Stirnseite, wie beim Ausführungsbeispiel der Figuren 5a, 5b eingesetzt und mit der Verprägung 10.2 stirnseitig verschweißt.

Auch bei den Ausführungsbeispielen der Figuren 5a, 5b und 6a, 6b stützen sich, wie aus den Schnittdarstellungen erkennbar, die verprägten Seitenwandabschnitte 10.1 bzw. 10.2 an den Rahmenprofilen 6.1, 6.2 ab.

Die anhand der vorstehenden Ausführungsbeispiele beschriebene Erfindung lässt sich auch bei einer Rahmenstruktur einsetzen, die anstelle eines eigenen Rahmenprofils eine Rahmenstruktur aufweist, an der die Seitenwand und der Montageflansch des Wannenteils beteiligt sind. Bei einer solchen Rahmenstruktur ist die Geometrie des Wannenteils Teil der Rahmenstruktur und wird durch ein oder mehrere, eine Hohlkammer einschließenden Rahmenteile vervollständigt. Auch bei einer solchen Ausgestaltung der Rahmenstruktur ergeben sich beim Einschweißen der Enden von Streben dieselben oder zumindest vergleichbare Vorteile, da eine Wärmeabfuhr sowohl montageflanschseitig als auch bodenseitig in die übrigen Rahmenteile der Rahmenstruktur erfolgt und hierdurch einen Verzug durch den Wärmeeintrag beim Schweißen verhindert.

Ebenso ergeben sich bei einem Wannenteil, welches mittels abgekanteter Bauteile und anschließendem Verschweißen hergestellt ist dieselben oder zumindest vergleichbare Vorteile, obwohl dort keine oder nur geringe Entformungsschrägen vorhanden sind. So müssen die Enden der Streben nicht nachträglich mittels Gehrung bearbeitet werden, der Deformationsweg ist ebenso gegenüber herkömmlichen Ausbildungen durch eine Art Pufferzone verlängert und die versteiften lokalen Anbindungsflächen in Gestalt der Verprägungen reduzieren deutlich einen Verzug trotz schweißbedingtem Wärmeeintrag.

Die Erfindung ist anhand von Ausführungsbeispielen beschrieben worden. Ohne den Umfang der geltenden Ansprüche zu verlassen, ergeben sich für einen Fachmann zahlreiche Ausgestaltungen, die Erfindung umsetzen zu können.

### Bezugszeichenliste

- 1, 1.1, 1.2: Wannenteil
- 2, 2.1, 2.2: Boden
- 3, 3.1, 3.2: Seitenwand
- 4: Seitenwand
- 5: Montageflansch
- 6, 6.1, 6.2: Rahmenprofil
- 7: Längsstrebe
- 8: Querstrebe
- 9, 9.1, 9.2: Verprägung
- 10, 10.1, 10.2: Seitenwandabschnitt
- 11: Spalt
- 12: Strebe
- 13: Seitenwand
- 14: Montageflansch

## Patentansprüche

1. Batteriegehäuse für ein elektromotorisch angetriebenes Fahrzeug mit einem einen Boden (2, 2.1, 2.2) und daran angeformte Seitenwände (3, 4; 3.1, 3.2) aufweisenden Wannenteil (1, 1.1, 1.2) und mit einer das Wannenteil (1, 1.1, 1.2) außenseitig umgebenden Rahmenstruktur, wobei zwischen den Seitenwänden (3, 4; 3.1, 3.2) und der außenseitig dazu angeordneten Rahmenstruktur ein Spalt verbleibt, **dadurch gekennzeichnet, dass** zumindest zwei einander bezüglich des Wannenvolumens gegenüberliegende Seitenwände (3, 4; 3.1, 3.2) des Wannenteils (1, 1.1, 1.2) jeweils wenigstens eine von dem Wannenvolumen wegweisend ausgeführte, sich an der Rahmenstruktur abstützende Verprägung (9, 9.1, 9.2) aufweisen und dass in den einander gegenüberliegenden Verprägungen (9, 9.1, 9.2) eine im Wannenteil (1, 1.1, 1.2) angeordnete Strebe (7, 8) mit ihrem stirnseitigen Ende abgestützt ist.

2. Batteriegehäuse nach Anspruch 1, **dadurch gekennzeichnet, dass** die flächige Ausdehnung der Verprägung (9, 9.1, 9.2) in den Seitenwänden (3, 4; 3.1, 3.2) um ein geringes Maß größer ist als die stirnseitige Endfläche einer sich darin abstützenden Strebe (7, 8).

3. Batteriegehäuse nach Anspruch 1 oder 2, **dadurch gekennzeichnet, dass** die Verprägungen (9, 9.1, 9.2) den gebogenen Übergangsbereich zwischen den Seitenwänden (3, 4; 3.1, 3.2) und dem Boden (2, 2.1, 2.2) des Wannenteils (1, 1.1, 1.2) nicht mit einschließen.

4. Batteriegehäuse nach Anspruch 1 oder 2, **dadurch gekennzeichnet, dass** die Seitenwände (3, 4; 3.1, 3.2) unter Ausbildung einer Schräge in Richtung zum Boden (2, 2.1, 2.2) verjüngt sind und die Verprägungen (9, 9.1, 9.2) ausgeführt sind, damit der gegenüber den unverprägten Seitenwandabschnitten verprägte Seitenwandabschnitt (10, 10.1, 10.2) in einem rechten Winkel zum Boden (2, 2.1, 2.2) des Wannenteils (1, 1.1, 1.2) angeordnet ist.

5. Batteriegehäuse nach Anspruch 4, **dadurch gekennzeichnet, dass** sich die Verprägungen (9, 9.1, 9.2) über die gesamte Höhe der Seitenwände (3, 4; 3.1, 3.2) erstrecken.

6. Batteriegehäuse nach einem der Ansprüche 1 bis 5, **dadurch gekennzeichnet, dass** die Rahmenstruktur durch ein das Wannenteil (1, 1.1, 1.2) einfassendes, aus einzelnen Profilabschnitten zusammengesetztes Rahmenprofil (6, 6.1, 6.2) gebildet ist und der verprägte Seitenwandabschnitt (10, 10.1, 10.2) an der zu dem Wannenteil (1, 1.1, 1.2) weisenden Seite der Rahmenstruktur (6, 6.1, 6.2) anliegt.

7. Batteriegehäuse nach einem der Ansprüche 1 bis 5, **dadurch gekennzeichnet, dass** die Rahmenstruktur zumindest durch die Seitenwände des Wannenteils (1, 1.1, 1.2) als Bestandteil der Rahmenstruktur ausgebildet ist.

8. Rahmenstruktur nach Anspruch 6, **dadurch gekennzeichnet, dass** die Profilabschnitte des Rahmenprofils (6, 6.1, 6.2) Leichtmetallhohlkammerprofile sind.

9. Batteriegehäuse nach einem der Ansprüche 1 bis 8, **dadurch gekennzeichnet, dass** die Verprägungen (9, 9.1, 9.2) mit einem Radius von weniger als 10 mm ausgeführt ist.

10. Batteriegehäuse nach einem der Ansprüche 1 bis 9, **dadurch gekennzeichnet, dass** das den Boden der Verprägungen (9, 9.1, 9.2) mit den benachbarten nicht verprägten Seitenwandabschnitten verbindende Seitenwandmaterial mit dem an der einen Seite benachbarten Boden der Verprägungen (9, 9.1, 9.2) und mit den auf der anderen Seite benachbarten unverprägten Seitenwandabschnitten einen stumpfen Winkel einschließt.

11. Batteriegehäuse nach Anspruch 10, **dadurch gekennzeichnet, dass** der Winkel größer als 120°ist.

12. Batteriegehäuse nach einem der Ansprüche 1 bis 11, **dadurch gekennzeichnet, dass** die Verprägungen (9, 9.1, 9.2) an den gegenüberliegenden Seitenwänden (3, 4; 3.1, 3.2) des Wannenteils (1, 1.1, 1.2) spiegelsymmetrisch zu der zwischen diesen Seitenwänden (3, 4; 3.1, 3.2) befindlichen Wannenteilquerebene angeordnet sind.

13. Batteriegehäuse nach einem der Ansprüche 1 bis 12, **dadurch gekennzeichnet, dass** alle einander gegenüberliegenden Seitenwände (3, 4; 3.1, 3.2) eine Verprägung (9, 9.1, 9.2) aufweisen.

14. Batteriegehäuse nach einem der Ansprüche 1 bis 13, **dadurch gekennzeichnet, dass** das Wannenteil (1, 1.1, 1.2) ein tiefgezogenes Stahlteil ist.

15. Batteriegehäuse nach einem der Ansprüche 1 bis 14, **dadurch gekennzeichnet, dass** die Stirnflächen der Strebe (7, 8) mit ihrer Oberseite einen rechten Winkel einschließen.

16. Batteriegehäuse nach einem der Ansprüche 1 bis 15, **dadurch gekennzeichnet, dass** die endseitigen Stirnflächen der Streben (7, 8) in der Verprägung (9, 9.1, 9.2) mit der Seitenwand (3, 4; 3.1, 3.2) verschweißt ist.

17. Batteriegehäuse nach einem der Ansprüche 1 bis 16, **dadurch gekennzeichnet, dass** eine oder mehrere der sich in eine Richtung erstreckenden Streben aus mehreren Strebensegmenten, die jeweils mit einem Verbindungselement miteinander verbunden sind, gebildet sind, wobei durch das Verbindungselement bei einer Kraftbeaufschlagung im Falle eines Aufpralls eine durchgängige Kraftübertragung von einer Seitenwand zur anderen des Wannenteils erfolgt.

## Claims

1. A battery housing for an electric motor-driven vehicle, comprising a base (2, 2.1. 2.2) and a pan part (1, 1.1, 1.2) having side walls (3, 4; 3.1, 3.2) formed thereto, and a frame structure enclosing the pan part (1, 1.1, 1.2) on the outside, wherein a gap remains between the side walls (3, 4; 3.1, 3.2) and the frame structure arranged externally thereto, **characterized in that** at least two side walls (3, 4; 3.1, 3.2) of the pan part (1, 1.1, 1.2), which are opposite each other with respect to the pan volume, each have at least one embossment (9, 9.1, 9.2) pointing away from the pan volume and supported on the frame structure, and that a stay (7, 8) arranged in the pan part (1, 1.1, 1.2) is supported by its front end in the embossments (9, 9.1, 9.2) located opposite each other.

2. The battery housing of claim 1, **characterized in that** the planar extension of the embossment (9, 9.1, 9.2) in the side walls (3, 4; 3.1, 3.2) is larger, by a slight amount, than the front end surface of a stay (7, 8) supported therein.

3. The battery housing of claim 1 or 2, **characterized in that** the embossments (9, 9.1, 9.2) do not enclose the curved transition region between the side walls (3, 4; 3.1, 3.2) and the base (2, 2.1, 2.2) of the pan part (1, 1.1, 1.2).

4. The battery housing of claim 1 or 2, **characterized in that** the side walls (3, 4; 3.1, 3.2) are tapered in the direction of the base (2, 2.1, 2.2), forming a bevel, and the embossments (9, 9.1, 9.2) are executed so that the side wall portion (10, 10.1, 10.2) embossed with respect to the unembossed side wall portions is arranged at a right angle to the base (2, 2.1, 2.2) of the pan part (1, 1.1, 1.2).

5. The battery housing of claim 4, **characterized in that** the embossments (9, 9.1, 9.2) extend over the entire height of the side walls (3, 4; 3.1, 3.2).

6. The battery housing of any of claims 1 to 5, **characterized in that** the frame structure is formed by a frame profile (6, 6.1, 6.2) which encloses the pan part (1, 1.1, 1.2) and is composed of individual profile portions, and the embossed side wall portion (10, 10.1, 10.2) rests on the side of the frame structure (6, 6.1, 6.2) which points towards the pan part (1, 1.1, 1.2).

7. The battery housing of any of claims 1 to 5, **characterized in that** the frame structure is shaped at least by the side walls of the pan part (1, 1.1, 1.2) as a component of the frame structure.

8. The frame structure of claim 6, **characterized in that** the profile portions of the frame profile (6, 6.1, 6.2) are light metal hollow chamber profiles.

9. The battery housing of any of claims 1 to 8, **characterized in that** the embossments (9, 9.1, 9.2) are executed with a radius of less than 10mm.

10. The battery housing of any of claims 1 to 9, **characterized in that** the side wall material connecting the base of the embossments (9, 9.1, 9.2) with the neighboring unembossed side wall portions comprises an obtuse angle with the base of the embossments (9, 9.1, 9.2) adjacent on one side and with the unembossed side wall portions adjacent on the other side.

11. The battery housing of claim 10, **characterized in that** the angle is greater than 120°.

12. The battery housing of any of claims 1 to 11, **characterized in that** the embossments (9, 9.1, 9.2) are arranged on the opposing side walls (3, 4; 3.1, 3.2) of the pan part (1, 1.1, 1.2) in a mirror-symmetrical way with respect to the pan part's transversal plane located between these side walls (3, 4; 3.1, 3.2).

13. The battery housing of any of claims 1 to 12, **characterized in that** all side walls (3, 4; 3.1, 3.2) located opposite each other have an embossment (9, 9.1, 9.2).

14. The battery housing of any of claims 1 to 13, **characterized in that** the pan part (1, 1.1, 1.2) is a deep-drawn steel part.

15. The battery housing of any of claims 1 to 14, **characterized in that** the front surfaces of the stay (7, 8) comprise a right angle with their upper side.

16. The battery housing of any of claims 1 to 15, **characterized in that** the end-side front surfaces of the stays (7, 8) are welded to the side wall (3, 4; 3.1, 3.2) in the embossment (9, 9.1, 9.2).

17. The battery housing of any of claims 1 to 16, **characterized in that** one or more of the stays extending in one direction are formed by multiple stay segments, which are respectively connected to each other with a connection element, wherein in case of application of a force in the event of a collision a continuous force transmission occurs via the connection element from one side wall to the other side wall of the pan part.

## Revendications

1. Boîtier de batterie, destiné à un véhicule entraîné par un moteur électrique, doté d'un fond (2, 2.1, 2.2) et d'un bac (1, 1.1, 1.2) présentant des parois latérales (3, 4, 3.1, 3.2) y étant formées et doté d'une structure de châssis entourant extérieurement le bac (1, 1.1, 1.2), où une fente reste entre les parois latérales (3, 4 ; 3.1, 3.2) et la structure de châssis disposée à l'extérieur par rapport à celle-ci, **caractérisé en ce qu'**au moins deux parois latérales (3, 4 ; 3.1, 3.2) du bac (1, 1.1, 1.2) situées l'une en face de l'autre par rapport au volume du bac présentent respectivement au moins une déformation (9, 9.1, 9.2) conçue s'éloignant du volume de bac, s'appuyant sur la structure de châssis, et que, dans les déformations (9, 9.1, 9.2) opposées l'une à l'autre, une entretoise (7, 8) disposée dans le bac (1, 1.1, 1.2) est appuyée avec son extrémité du côté frontal.

2. Boîtier de batterie selon la revendication 1, **caractérisé en ce que** l'extension plane de la déformation (9, 9.1, 9.2) dans les parois latérales (3, 4, 3.1, 3.2) est légèrement plus grande que la surface terminale du côté frontal d'une entretoise (7, 8) s'y appuyant.

3. Boîtier de batterie selon la revendication 1 ou 2, **caractérisé en ce que** les déformations (9, 9.1, 9.2) ne comprennent pas la zone de transition courbe entre les parois latérales (3, 4 ; 3.1, 3.2) et le fond (2, 2.1, 2.2) du bac (1, 1.1, 1.2).

4. Boîtier de batterie selon la revendication 1 ou 2, **caractérisé en ce que** les parois latérales (3, 4 ; 3.1, 3.2) s'amenuisent, moyennant la formation d'une inclinaison, en direction du fond (2, 2.1, 2.2), et les déformations (9, 9.1, 9.2) sont conçues afin que la partie de paroi latérale (10, 10.1, 10.2) déformée par rapport aux parties de parois latérales non déformées soit disposée à angle droit par rapport au fond (2, 2.1, 2.2) du bac (1, 1.1, 1.2).

5. Boîtier de batterie selon la revendication 4, **caractérisé en ce que** les déformations (9, 9.1, 9.2) s'étendent sur la hauteur complète des parois latérales (3, 4 ; 3.1, 3.2).

6. Boîtier de batterie selon l'une des revendications 1 à 5, **caractérisé en ce que** la structure de châssis est formée par un profilé de châssis (6, 6.1, 6.2) assemblé à partir de segments de profilés entourant le bac (1, 1.1, 1.2) et la partie de paroi latérale (10, 10.1, 10.2) déformée est plaquée contre le côté de la structure de châssis (6, 6.1, 6.2) orientée vers le bac (1, 1.1, 1.2).

7. Boîtier de batterie selon l'une des revendications 1 à 5, **caractérisé en ce que** la structure de châssis est formée au moins par les parois latérales du bac (1, 1.1, 1.2) servant de composant de la structure de châssis.

8. Structure de châssis selon la revendication 6, **caractérisée en ce que** les segments de profilé du profilé de châssis (6, 6.1, 6.2) sont des profilés à chambres en métal léger.

9. Boîtier de batterie selon l'une des revendications 1 à 8, **caractérisé en ce que** les déformations (9, 9.1, 9.2) sont conçus avec un rayon inférieur à 10 mm.

10. Boîtier de batterie selon l'une des revendications 1 à 9, **caractérisé en ce que** le fond des déformations (9, 9.1, 9.2) avec la matière des parois latérales reliant les parties de paroi latérale non déformées voisines forme un angle obtus avec le fond des déformations (9, 9.1, 9.2) voisin d'un côté et avec les parties de paroi latérale non déformées voisines de l'autre côté.

11. Boîtier de batterie selon la revendication 10, **caractérisé en ce que** l'angle est supérieur à 120°.

12. Boîtier de batterie selon l'une des revendications 1 à 11, **caractérisé en ce que** les déformations (9, 9.1, 9.2) sont disposées sur des parois latérales (3, 4 ; 3.1, 3.2) du bac (1, 1.1, 1.2) de manière symétrique par rapport au plan transversal du bac se trouvant entre ces parois latérales (3, 4, 3.1, 3.2).

13. Boîtier de batterie selon l'une des revendications 1 à 12, **caractérisé en ce que** toutes les parois latérales (3, 4 ; 3.1, 3.2) opposées présentent une déformation (9, 9.1, 9.2).

14. Boîtier de batterie selon l'une des revendications 1 à 13, **caractérisé en ce que** le bac (1, 1.1, 1.2) est une pièce en acier emboutie.

15. Boîtier de batterie selon l'une des revendications 1 à 14, **caractérisé en ce que** les surfaces frontales de l'entretoise (7, 8) forment un angle droit avec leur côté supérieur.

16. Boîtier de batterie selon l'une des revendications 1 à 15, **caractérisé en ce que** les surfaces frontales des entretoises (7, 8) du côté des extrémités sont soudées dans la déformation (9, 9.1, 9.2) avec la paroi latérale (3, 4 ; 3.1, 3.2).

17. Boîtier de batterie selon l'une des revendications 1 à 16, **caractérisé en ce qu'**une ou plusieurs des entretoises s'étendant dans une direction sont formées par plusieurs segments d'entretoise qui sont respectivement reliés ensemble avec un élément de liaison, où une transmission de force constante se produit d'une paroi latérale vers l'autre paroi latérale du bac lors d'un impact pour l'application d'une force par l'élément de liaison.
